# EUROPÄISCHE PATENTANMELDUNG

(11) **EP 3 096 270 A1**
(43) Veröffentlichungstag der Anmeldung: **23.11.2016**
(21) Anmeldenummer: 16168272.9
(22) Anmeldetag: 04.05.2016
(51) Int. Cl.: G06Q 10/08

(54) **VERFAHREN UND VORRICHTUNG ZUM FESTLEGEN EINER ZUSTELL- UND/ODER ABHOLPOSITION**

(30) Priorität: 20.05.2015 DE 102015108003
(71) Anmelder: Deutsche Post AG, 53113 Bonn (DE)
(72) Erfinder: Wiechers, Dr. Ralph, 53508 Mayschoß (DE); Busecke, Matthias, 53225 Bonn (DE)
(74) Vertreter: Cohausz & Florack

(57) **Zusammenfassung**

Es wird unter anderem offenbart ein Verfahren, umfassend
- Bereitstellen (501), durch eine Benutzervorrichtung (100), einer aktivierbaren Benutzerschnittstelle (401) zum Festlegen einer Zustell- und/oder Abholposition,
- Erfassen (502) einer Position der Benutzervorrichtung (100), wenn die Benutzerschnittstelle (401) aktiviert wird, und
- Kommunizieren (504) einer mit der erfassten Position assoziierten Zustell-und/oder Abholpositionsinformation von der Benutzervorrichtung (100) an eine Zustellungsdienstvorrichtung (200).

## Beschreibung

### Gebiet

Beispielhafte Ausführungsformen der Erfindung betreffen ein Verfahren zum Festlegen einer Zustell- und/oder Abholposition, Verfahren zum Kommunizieren einer Zustell- und/oder Abholposition, ein Computerprogramm, eine Benutzervorrichtung, eine Zustellungsdienstvorrichtung und ein System.

### Hintergrund

Die Zustellung einer Sendung an einer mobilen Sendungsaufnahmevorrichtung durch das Ablegen der Sendung in die Sendungsaufnahmevorrichtung ist eine für den Sendungsempfänger sehr komfortable Zustellungsform, da der Sendungsempfänger die Sendung nicht persönlich in Empfang nehmen muss. Ein Beispiel für eine mobile Sendungsaufnahmevorrichtung ist ein Fahrzeug des Sendungsempfängers. Beispielsweise kann die Sendung in das auf einem Unternehmensparkplatz abgestellte Fahrzeug des Sendungsempfängers während der Arbeitszeit des Sendungsempfängers zugestellt werden. Allerdings muss dem Zusteller die Zustellposition des Fahrzeugs vorab mitgeteilt werden. Hierdurch werden die Flexibilität und der Komfort dieser Zustellungsform deutlich eingeschränkt, da der Sendungsempfänger an die vorab mitgeteilte Zustellungsposition gebunden ist und das Fahrzeug nicht an einer anderen Position abstellen kann.

### Zusammenfassung einiger beispielhafter Ausführungsformen der Erfindung

Die vorliegende Erfindung hat sich daher unter anderem die Aufgabe gestellt, diese Probleme zu überwinden.

Gemäß der Erfindung wird ein erstes Verfahren offenbart, das erste Verfahren umfassend:
- Bereitstellen, durch eine Benutzervorrichtung, einer aktivierbaren Benutzerschnittstelle zum Festlegen einer Zustell- und/oder Abholposition,
- Erfassen einer Position der Benutzervorrichtung, wenn die Benutzerschnittstelle aktiviert wird, und
- Kommunizieren einer mit der erfassten Position assoziierten Zustell- und/oder Abholpositionsinformation von der Benutzervorrichtung an eine Zustellungsdienstvorrichtung.

Zum Beispiel ist das erste Verfahren ein Verfahren zum Festlegen einer Zustell- und/oder Abholposition, beispielsweise ein Verfahren zum Festlegen einer Zustellposition für eine Zustellung einer Sendung (z.B. in eine mobile Sendungsaufnahmevorrichtung wie Fahrzeug) und/oder zum Festlegen einer Abholposition für eine Abholung einer Sendung (z.B. aus einer mobilen Sendungsaufnahmevorrichtung wie einem Fahrzeug). Zum Beispiel wird das erste Verfahren zumindest teilweise von der Benutzervorrichtung und/oder von jeweiligen Mitteln der Benutzervorrichtung ausgeführt.

Gemäß der Erfindung wird eine Benutzervorrichtung offenbart, die folgendes umfasst:
- Mittel eingerichtet zur Ausführung und/oder Steuerung des ersten Verfahrens oder jeweilige Mittel zur Ausführung und/oder Steuerung der Schritte des ersten Verfahrens (z.B. aller Schritte, die nicht durch einen Benutzer ausgeführt werden).

Zum Beispiel sind die Mittel der erfindungsgemäßen Benutzervorrichtung eingerichtet, das erste Verfahren oder dessen Schritte auszuführen und/oder zu steuern (z.B. abgesehen von den Schritten, die durch einen Benutzer ausgeführt werden). Ein oder mehrere der Schritte des ersten Verfahrens können auch durch die gleichen Mittel ausgeführt und/oder gesteuert werden. Beispielsweise können ein oder mehrere der Mittel der Benutzervorrichtung zumindest teilweise durch einen oder mehrere Prozessoren gebildet sein.

Zum Beispiel umfasst die erfindungsgemäße Benutzervorrichtung zumindest einen Prozessor und zumindest einen Speicher, der Programmcode beinhaltet, wobei der Speicher und der Programmcode eingerichtet sind, die Benutzervorrichtung mit dem zumindest einen Prozessor dazu zu veranlassen, zumindest das erste Verfahren auszuführen und/oder zu steuern. Dabei können entweder alle Schritte des ersten Verfahrens gesteuert werden, oder alle Schritte des ersten Verfahrens ausgeführt werden, oder ein oder mehrere Schritte gesteuert und ein oder mehrere Schritte ausgeführt werden.

Unter einem Prozessor soll beispielsweise eine Kontrolleinheit, ein Mikroprozessor, eine Mikrokontrolleinheit wie ein Mikrocontroller, ein digitaler Signalprozessor (DSP: Digital Signal Processor), eine Anwendungsspezifische Integrierte Schaltung (ASIC: Application-Specific Integrated Circuit) oder eine im Feld programmierbare Gatter-Anordnung (FPGA: Field Programmable Gate Array) verstanden werden.

Zum Beispiel ist die erfindungsgemäße Benutzervorrichtung eine tragbare Benutzervorrichtung. Zum Beispiel ist die erfindungsgemäße Benutzervorrichtung ein Benutzergerät wie ein Mobiltelefon, ein Persönlicher Digitaler Assistent (PDA), ein Medienabspielgerät (z.B. ein iPod), ein Navigationsgerät (z.B. ein Navigationsgerät für ein Fahrzeug, z.B. ein festeingebautes Navigationsgerät eines Fahrzeugs oder ein tragbares Navigationsgerät), ein Notebook-Computer und/oder ein Tablet-Computer.

Gemäß der Erfindung wird ferner ein zweites Verfahren offenbart, das zweite Verfahren umfassend:
- Erhalten einer Zustell- und/oder Abholpositionsinformation von einer Benutzervorrichtung an einer Zustellungsdienstvorrichtung,
- Zuordnen, durch die Zustellungsdienstvorrichtung, der erhaltenen Zustell- und/oder Abholpositionsinformation zu einer Zustellervorrichtung,
- Kommunizieren der erhaltenen Zustell- und/oder Abholpositionsinformation von der Zustellungsdienstvorrichtung an die Zustellervorrichtung.

Zum Beispiel ist das zweite Verfahren ein Verfahren zum Kommunizieren einer Zustell- und/oder Abholposition, beispielsweise ein Verfahren zum Kommunizieren einer Zustellposition für eine Zustellung einer Sendung (z.B. in eine mobile Sendungsaufnahmevorrichtung wie ein Fahrzeug) und/oder zum Festlegen einer Abholposition für eine Abholung einer Sendung (z.B. aus einer mobilen Sendungsaufnahmevorrichtung wie einem Fahrzeug) an eine Zustellervorrichtung. Zum Beispiel wird das zweite Verfahren zumindest teilweise von der Zustellungsdienstvorrichtung und/oder von jeweiligen Mitteln der Zustellungsdienstvorrichtung ausgeführt.

Gemäß der Erfindung wird eine Zustellungsdienstvorrichtung offenbart, die folgendes umfasst:
- Mittel eingerichtet zur Ausführung und/oder Steuerung des zweiten Verfahrens oder jeweilige Mittel zur Ausführung und/oder Steuerung der Schritte des zweiten Verfahrens (z.B. aller Schritte, die nicht durch einen Benutzer ausgeführt werden).

Zum Beispiel sind die Mittel der erfindungsgemäßen Zustellungsdienstvorrichtung eingerichtet, das zweite Verfahren oder dessen Schritte auszuführen und/oder zu steuern (z.B. abgesehen von den Schritten, die durch einen Benutzer ausgeführt werden). Ein oder mehrere der Schritte des zweiten Verfahrens können auch durch die gleichen Mittel ausgeführt und/oder gesteuert werden. Beispielsweise können ein oder mehrere der Mittel der Benutzervorrichtung zumindest teilweise durch einen oder mehrere Prozessoren gebildet sein.

Zum Beispiel umfasst die erfindungsgemäße Zustellungsdienstvorrichtung zumindest einen Prozessor und zumindest einen Speicher, der Programmcode beinhaltet, wobei der Speicher und der Programmcode eingerichtet sind, die Zustellungsdienstvorrichtung mit dem zumindest einen Prozessor dazu zu veranlassen, zumindest das zweite Verfahren auszuführen und/oder zu steuern. Dabei können entweder alle Schritte des zweiten Verfahrens gesteuert werden, oder alle Schritte des zweiten Verfahrens ausgeführt werden, oder ein oder mehrere Schritte gesteuert und ein oder mehrere Schritte ausgeführt werden.

Wie oben offenbart, soll unter einem Prozessor beispielsweise eine Kontrolleinheit, ein Mikroprozessor, eine Mikrokontrolleinheit wie ein Mikrocontroller, ein DSP, ein ASIC oder ein FPGA verstanden werden.

Zum Beispiel ist die erfindungsgemäße Zustellungsdienstvorrichtung ein Server eines Zustellungsdienstes, beispielsweise ein Backend-Server des Zustellungsdienstes.

Gemäß der Erfindung wird ferner ein drittes Verfahren offenbart, das dritte Verfahren umfassend:
- das erste Verfahren und/oder die Schritte des ersten Verfahrens, und
- das zweite Verfahren und/oder die Schritte des zweiten Verfahrens.

Zum Beispiel wird das dritte Verfahren zumindest teilweise von der Benutzervorrichtung und/oder von jeweiligen Mitteln der Benutzervorrichtung sowie der Zustellungsdienstvorrichtung und/oder von jeweiligen Mitteln der Zustellungsdienstvorrichtung ausgeführt und/oder gesteuert.

Gemäß der Erfindung wird ein System offenbart, das folgendes umfasst:
- eine oder mehrere erfindungsgemäße Benutzervorrichtungen, und
- eine oder mehrere erfindungsgemäße Zustellungsdienstvorrichtungen.

Gemäß der Erfindung wird ein Computerprogramm offenbart, das folgendes umfasst: Programmanweisungen, die einen Prozessor zur Ausführung und/oder Steuerung des ersten, des zweiten und/oder des dritten Verfahrens veranlassen, wenn das Computerprogramm auf dem Prozessor läuft.

Das erfindungsgemäße Computerprogramm ist beispielsweise ein Anwendungsprogramm für eine Benutzervorrichtung, zum Beispiel ein Anwendungsprogramm für ein Mobiltelefon wie eine App.

Das erfindungsgemäße Computerprogramm kann beispielsweise über ein Netzwerk wie das Internet, ein Telefon- oder Mobilfunknetz und/oder ein lokales Netzwerk verteilbar sein. Das erfindungsgemäße Computerprogramm kann zumindest teilweise Software und/oder Firmware eines Prozessors sein. Es kann gleichermaßen zumindest teilweise als Hardware implementiert sein. Das erfindungsgemäße Computerprogramm kann beispielsweise auf einem computerlesbaren Speichermedium gespeichert sein, z.B. einem berührbaren, magnetischen, elektrischen, elektromagnetischen, optischen und/oder andersartigen Speichermedium. Das Speichermedium kann beispielsweise Teil des Prozessors sein, beispielsweise ein (nicht-flüchtiger oder flüchtiger) Programmspeicher und/oder Hauptspeicher des Prozessors oder ein Teil davon.

Im Folgenden werden die Eigenschaften der erfindungsgemäßen Verfahren, der erfindungsgemäßen Benutzervorrichtung, der erfindungsgemäßen Zustellungsdienstvorrichtung, des erfindungsgemäßen Systems und des erfindungsgemäßen Computerprogramms - teilweise beispielhaft - beschrieben.

Unter einer aktivierbaren Benutzerschnittstelle soll beispielsweise ein Element einer Benutzeroberfläche der Benutzervorrichtung verstanden werden, das durch eine durch Eingabemittel der Benutzervorrichtung erfassbare Benutzereingabe aktivierbar ist. Das Bereitstellen der aktivierbaren Benutzerschnittstelle gemäß dem ersten Verfahren erfolgt beispielsweise durch das Aktivierbarmachen der aktivierbaren Benutzerschnittstelle derart, dass die aktivierbare Benutzerschnittstelle durch eine durch Eingabemittel der Benutzervorrichtung erfassbare Benutzereingabe aktivierbar ist. Zum Beispiel umfasst die Benutzervorrichtung ein oder mehrere entsprechende Bereitstellungsmittel und/oder ein oder mehrere Eingabemittel. Beispielsweise sind die Bereitstellungsmittel der Benutzervorrichtung eingerichtet, die aktivierbare Benutzerschnittstelle bereitzustellen, und die Eingabemittel der Benutzervorrichtung sind eingerichtet, eine Benutzereingabe zum Aktivieren der bereitgestellten aktivierbaren Benutzerschnittstelle zu erfassen.

Zum Beispiel ist die aktivierbare Benutzerschnittstelle ein aktivierbares Element einer graphischen Benutzeroberfläche, beispielsweise eine Schaltfläche wie eine Tastenschaltfläche. Ein solches Element einer graphischen Benutzeroberfläche wird beispielsweise durch das Anzeigen auf einem Anzeigemittel der Benutzervorrichtung bereitgestellt. Ein auf einem Anzeigemittel angezeigtes Element einer graphischen Benutzeroberfläche kann beispielsweise durch eine Eingabe an einem geeigneten Eingabemittel wie einer Maus, einen Trackball, einen Joystick, einen Touchpad und/oder eine Tastatur erfolgen. Ein auf einem berührungsempfindlichen Anzeigemittel wie einem berührungsempfindlichen Bildschirm (z.B. einem Touchscreen) angezeigtes Element einer graphischen Benutzeroberfläche kann beispielsweise auch durch eine Berührung des Anzeigemittels aktiviert werden. Zum Beispiel umfasst die Benutzervorrichtung ein oder mehrere entsprechend eingerichtete Anzeigemittel.

Unter dem Erfassen einer Position der Benutzervorrichtung gemäß dem ersten Verfahren, wenn die aktivierbare Benutzerschnittstelle aktiviert wird, soll beispielsweise verstanden werden, dass das Erfassen der aktuellen Position der Benutzervorrichtung möglichst zeitnah vor, während und/oder nach der Aktivierung der aktivierbaren Benutzerschnittstelle erfolgt. Zum Beispiel kann das Erfassen der Position der Benutzervorrichtung unmittelbar nach der Aktivierung der aktivierbaren Benutzerschnittstelle erfolgen, so dass das Ergebnis des Erfassens die aktuelle Position der Benutzervorrichtung ist. Falls die aktuelle Position der Benutzervorrichtung nicht erfassbar ist, kann stattdessen beispielsweise das Ergebnis des Erfassens die zuletzt erfasste Position (d.h. die letzte vor der Aktivierung der aktivierbaren Benutzerschnittstelle erfasste Position) sein. Dadurch soll möglichst die Position der Benutzervorrichtung erfasst werden, an der sich die Benutzervorrichtung bei der Aktivierung der aktivierbaren Benutzerschnittstelle befindet, so dass der Benutzer durch die Position, an der die aktivierbare Benutzerschnittstelle durch den Benutzer aktiviert wird, eine Zustell- und/oder Abholposition festlegen kann.

Die gemäß dem ersten Verfahren erfasste Position der Benutzervorrichtung ist beispielsweise eine räumliche und/oder geographische Position der Benutzervorrichtung. Die Position der Benutzervorrichtung wird beispielsweise durch ein oder mehrere Positionierungsmittel der Benutzervorrichtung wie einen Positionierungssensor erfasst. Ein Beispiel für einen solchen Positionierungssensor ist ein Sensor eines satellitengestützten Positionierungssystems wie ein Global-Positioning-System-Sensor (GPS-Sensor), ein GLONASS-Sensor und/oder ein Galileo-Sensor.

Unter einer Zustell- und/oder Abholposition soll beispielsweise eine Position verstanden werden, an der oder in deren Nähe eine Zustellung einer Sendung (z.B. in eine mobile Sendungsaufnahmevorrichtung wie ein Fahrzeug) und/oder eine Abholung einer Sendung (z.B. aus einer mobilen Sendungsaufnahmevorrichtung wie einem Fahrzeug) stattfinden soll. Eine Zustell- und/oder Abholpositionsinformation umfasst beispielsweise eine Positionsangabe und/oder Koordinatenangabe einer Zustell- und/oder Abholposition. Ferner umfasst eine Zustell- und/oder Abholpositionsinformation beispielsweise eine der Zustellung und/oder Abholung der Sendung zuordenbare Kennung, beispielsweise eine Kennung der Sendung, des Empfängers/Absenders der Sendung, eines Benutzers der Benutzervorrichtung und/oder einer mobilen Sendungsaufnahmevorrichtung (z.B. eines Fahrzeugs), in die die Zustellung und/oder aus der die Abholung erfolgen soll.

Die Zustell- und/oder Abholpositionsinformation soll beispielsweise als mit der gemäß dem ersten Verfahren erfassten Position assoziiert verstanden werden, wenn sie eine Positionsangabe und/oder Koordinatenangabe der erfassten Position umfasst. Die Zustell- und/oder Abholpositionsinformation umfasst beispielsweise eine Positionsangabe und/oder Koordinatenangabe der gemäß dem ersten Verfahren erfassten Position der Benutzervorrichtung, beispielsweise eine möglichst zeitnah vor, während und/oder nach der Aktivierung der aktivierbaren Benutzerschnittstelle erfassten Position der Benutzervorrichtung. Ein Benutzer kann somit durch die Aktivierung der aktivierbaren Benutzerschnittstelle eine Zustell- und/oder Abholposition, d.h. eine Position, an der oder in deren Nähe eine Zustellung einer Sendung (z.B. in eine mobile Sendungsaufnahmevorrichtung wie ein Fahrzeug) oder eine Abholung einer Sendung (z.B. aus einer mobilen Sendungsaufnahmevorrichtung wie einem Fahrzeug) stattfinden soll, festlegen. Die Erfindung ist somit insbesondere im Zusammenhang mit der Zustellung einer Sendung in eine mobile Sendungsaufnahmevorrichtung und der Abholung einer Sendung aus einer mobilen Sendungsaufnahmevorrichtung vorteilhaft.

Unter einer mobilen Sendungsaufnahmevorrichtung soll vorzugsweise jede ortsveränderliche Vorrichtung verstanden werden, die eine Sendung in einem verschließbaren Innenraum aufnehmen kann. Ein Beispiel für eine mobile Sendungsaufnahmevorrichtung ist ein Fahrzeug (z.B. ein Kraftfahrzeug wie ein Lastkraftwagen oder ein Personenkraftwagen, besonders vorzugsweise ein Personenkraftwagen, z.B. ein Auto) und/oder ein mobiler Brief- und/oder Paketkasten (z.B. ein sogenannter Paktbutler). Die Benutzervorrichtung kann Teil der Sendungsaufnahmevorrichtung sein (z.B. als Navigationsgerät eines Fahrzeugs). Alternativ ist die Benutzervorrichtung separat von der Sendungsaufnahmevorrichtung (z.B. als Mobiltelefon), so dass eine besonders hohe Flexibilität möglich ist (z.B. kann ein Benutzer die Benutzervorrichtung zum Festlegen der Zustell- und/oder Abholposition im Zusammenhang mit verschiedenen Sendungsaufnahmevorrichtungen verwenden).

Die Zustell- und/oder Abholpositionsinformation wird gemäß dem ersten Verfahren beispielsweise über eine Kommunikationsverbindung von der Benutzervorrichtung an die Zustellungsdienstvorrichtung kommuniziert, beispielsweise über eine Kommunikationsverbindung von der Benutzervorrichtung an die Zustellungsdienstvorrichtung gesendet. Zum Beispiel umfasst die Benutzervorrichtung ein oder mehrere entsprechende Kommunikationsmittel. Die Kommunikationsmittel der Benutzervorrichtung sind beispielsweise eingerichtet, über eine Kommunikationsverbindung mit einer Zustellungsdienstvorrichtung zu kommunizieren und Informationen zu senden und/oder zu empfangen. Ein Beispiel für solche Kommunikationsmittel ist eine Kommunikationsschnittstelle. Zum Beispiel umfassen die Kommunikationsmittel der Benutzervorrichtung eine Kommunikationsschnittstelle einer drahtlosen und/oder drahtgebundenen Kommunikationstechnik.

Unter dem Erhalten der Zustell- und/oder Abholpositionsinformation von der Benutzervorrichtung an der Zustellungsdienstvorrichtung gemäß dem zweiten Verfahren soll beispielsweise verstanden werden, dass die Zustell- und/oder Abholposition über eine Kommunikationsverbindung von der Benutzervorrichtung an der Zustellungsdienstvorrichtung empfangen wird. Zum Beispiel umfasst die Zustellungsdienstvorrichtung ein oder mehrere entsprechende Kommunikationsmittel. Die Kommunikationsmittel der Zustellungsdienstvorrichtung sind beispielsweise eingerichtet, über eine Kommunikationsverbindung mit einer Benutzervorrichtung zu kommunizieren und Informationen zu senden und/oder zu empfangen. Ein Beispiel für solche Kommunikationsmittel ist eine Kommunikationsschnittstelle. Zum Beispiel umfassen die Kommunikationsmittel der Zustellungsdienstvorrichtung eine Kommunikationsschnittstelle einer drahtlosen und/oder drahtgebundenen Kommunikationstechnik.

Gemäß dem zweiten Verfahren wird die erhaltene Zustell- und/oder Abholpositionsinformation beispielsweise zumindest teilweise in Abhängigkeit einer von der Zustell- und/oder Abholpositionsinformation umfassten Kennung der Zustellervorrichtung zugeordnet. Zum Beispiel wird die Zustell- und/oder Abholpositionsinformation der Zustellervorrichtung des Zustellers zugeordnet, der die Sendung (z.B. in eine mobile Sendungsaufnahmevorrichtung wie ein Fahrzeug) zustellen soll.

Die Zustell- und/oder Abholpositionsinformation wird gemäß dem zweiten Verfahren ferner beispielsweise über eine Kommunikationsverbindung von der Zustellungsdienstvorrichtung an die Zustellervorrichtung kommuniziert, beispielsweise über eine Kommunikationsverbindung von der Zustellungsdienstvorrichtung an die Zustellervorrichtung gesendet. Die Kommunikationsmittel der Zustellungsdienstvorrichtung sind beispielsweise eingerichtet, über eine Kommunikationsverbindung mit einer Zustellervorrichtung zu kommunizieren und Informationen zu senden und/oder zu empfangen. Wie oben offenbart, ist ein Beispiel für solche Kommunikationsmittel eine Kommunikationsschnittstelle. Zum Beispiel umfassen die Kommunikationsmittel der Zustellungsdienstvorrichtung eine Kommunikationsschnittstelle einer drahtlosen und/oder drahtgebundenen Kommunikationstechnik.

Die Zustellervorrichtung ist beispielsweise ein tragbares elektronisches Gerät und/oder eine tragbare elektronische Einheit. Die Zustellervorrichtung ist beispielsweise eingerichtet, mit der erfindungsgemäßen Zustellungsdienstvorrichtung zu kommunizieren. Zum Beispiel kann die Zustellervorrichtung entsprechende Kommunikationsmittel umfassen. Ein Beispiel für eine Zustellervorrichtung ist zum Beispiel ein Benutzergerät wie ein Mobiltelefon, ein Persönlicher Digitaler Assistent (PDA), ein Medienabspielgerät (z.B. ein iPod) und/oder ein Navigationsgerät. Ein weiteres Beispiel für eine Zustellervorrichtung ist zum Beispiel ein Zustellergerät eines Zustelldienstes wie ein Handscanner, beispielsweise der Dolphin 99EX Mobile Computer der Firma Honeywell. Ein weiteres Beispiel für eine Zustellervorrichtung ist zum Beispiel ein "Tag" wie ein RFID- oder NFC-Tag, beispielsweise ein MiFARE DESFire von NXP.

Zum Beispiel umfasst eine Kommunikationsverbindung zwischen der Benutzervorrichtung und der Zustellungsdienstvorrichtung eine Kommunikationsverbindung gemäß einer drahtlosen Kommunikationstechnik. Beispielsweise umfasst eine Kommunikationsverbindung zwischen der Zustellungsdienstvorrichtung und der Zustellervorrichtung eine weitere Kommunikationsverbindung gemäß einer drahtlosen Kommunikationstechnik. Ein Beispiel für eine drahtlose Kommunikationstechnik ist eine lokale Funknetztechnik wie Radio Frequency Identification (RFID) und/oder Near Field Communication (NFC) und/oder Bluetooth (z.B. Bluetooth Version 2.1 und/oder 4.0) und/oder Wireless Local Area Network (WLAN). RFID und NFC- sind beispielsweise gemäß den ISO-Standards 18000,11784/11785 und dem ISO/IEC-Standard 14443-A und 15693 spezifiziert. Die Bluetooth-Spezifikationen sind derzeit im Internet unter www.bluetooth.org erhältlich. WLAN ist zum Beispiel in den Standards der IEEE-802.11-Familie spezifiziert. Ein weiteres Beispiel für eine drahtlose Kommunikationstechnik ist eine überörtliche Funknetztechnik wie beispielsweise eine Mobilfunktechnik, zum Beispiel Global System for Mobile Communications (GSM) und/oder Universal Mobile Telecommunications System (UMTS) und/oder Long Term Evolution (LTE). Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich.

Wie oben offenbart, ist die Erfindung insbesondere im Zusammenhang mit der Zustellung einer Sendung in eine mobile Sendungsaufnahmevorrichtung und der Abholung einer Sendung aus einer mobilen Sendungsaufnahmevorrichtung vorteilhaft und erhöht die Flexibilität und den Komfort dieser Zustellungsform für den Benutzer deutlich. Denn die Erfindung bietet dem Benutzer die Möglichkeit, eine Zustell- und/oder Abholposition einfach und unkompliziert festzulegen, sobald er sich mit der Benutzervorrichtung an oder in der Nähe der gewünschten Zustell- und/oder Abholposition befindet. Gleichzeitig stellt die Erfindung sicher, dass dem Zusteller über die Zustellervorrichtung alle notwendigen Informationen automatisiert zur Verfügung gestellt werden.

Weitere Vorteile der offenbarten Erfindung werden nachfolgend anhand beispielhafter Ausführungsformen der erfindungsgemäßen Verfahren, der erfindungsgemäßen Benutzervorrichtung, der erfindungsgemäßen Zustellungsdienstvorrichtung, des erfindungsgemäßen Systems und des erfindungsgemäßen Computerprogramms beschrieben, deren Offenbarung für die jeweiligen Kategorien (Verfahren, Vorrichtung, System, Computerprogramm) gleichermaßen gelten soll.

Gemäß einer beispielhaften Ausführungsform der Erfindung ist die aktivierbare Benutzerschnittstelle ein aktivierbares Element einer Benutzeroberfläche der Benutzervorrichtung ist. Wie oben offenbart, ist die aktivierbare Benutzerschnittstelle zum Beispiel ein aktivierbares Element einer graphischen Benutzeroberfläche. Ein solches Element einer graphischen Benutzeroberfläche wird beispielsweise durch das Anzeigen auf einem Anzeigemittel der Benutzervorrichtung bereitgestellt. Ein auf einem Anzeigemittel angezeigtes aktivierbares Element einer graphischen Benutzeroberfläche ist beispielsweise durch eine Eingabe eines Benutzers an einem geeigneten Eingabemittel wie einer Maus, einen Trackball, einen Joystick, einen Touchpad und/oder eine Tastatur aktivierbar. Ein auf einem berührungsempfindlichen Anzeigemittel wie einem berührungsempfindlichen Bildschirm (z.B. einem Touchscreen) angezeigtes Element einer graphischen Benutzeroberfläche ist beispielsweise auch durch eine Berührung des Anzeigemittels aktivierbar.

Gemäß einer beispielhaften Ausführungsform der Erfindung umfasst die aktivierbare Benutzerschnittstelle eine Schaltfläche, insbesondere eine Tastenschaltfläche. Eine Schaltfläche ist beispielsweise ein aktivierbares Element einer graphischen Benutzeroberfläche. Ein solches Element einer graphischen Benutzeroberfläche wird beispielsweise durch das Anzeigen auf einem Anzeigemittel der Benutzervorrichtung bereitgestellt. Eine Tastenschaltfläche ist beispielsweise durch das "Anklicken" der Tastenschaltfläche mit Hilfe eines geeigneten Eingabemittels aktivierbar.

Gemäß einer beispielhaften Ausführungsform der Erfindung ist die aktivierbare Benutzerschnittstelle durch eine Benutzereingabe aktivierbar ist. Wie oben offenbart, ist die aktivierbare Benutzerschnittstelle beispielsweise durch eine Eingabe eines Benutzers an einem geeigneten Eingabemittel aktivierbar. Vorzugsweise ist die aktivierbare Benutzerschnittstelle durch möglichst wenige Benutzereingaben, besonders vorzugsweise durch eine einzige Benutzereingabe (z.B. durch ein einziges "Anklicken" einer Schaltfläche) aktivierbar, so dass ein Benutzer der Benutzervorrichtung das Erfassen der Position und das Kommunizieren der mit der erfassten Position assoziierten Zustell- und/oder Abholpositionsinformation gemäß dem ersten Verfahren besonders unkompliziert und einfach veranlassen kann. Dies ist beispielsweise vorteilhaft, um das Festlegen einer Zustell- und/oder Abholposition für den Benutzer möglichst unkompliziert und einfach zu gestalten.

Gemäß einer beispielhaften Ausführungsform der Erfindung umfasst das erste Verfahren ferner folgendes:
- Bereitstellen, durch die Benutzervorrichtung, einer weiteren Benutzerschnittstelle zum Festlegen eines Zustell- und/oder Abholzeitraums,
- Erhalten einer Zustell- und/oder Abholzeitrauminformation durch die weitere Benutzerschnittstelle an der Benutzervorrichtung, und
- Kommunizieren der erhaltenen Zustell- und/oder Abholzeitrauminformation von der Benutzervorrichtung an die Zustellungsdienstvorrichtung.

Zum Beispiel ist das erste Verfahren ein Verfahren zum Festlegen einer Zustellposition und eines Zustellzeitraums für eine Zustellung einer Sendung (z.B. in eine mobile Sendungsaufnahmevorrichtung wie ein Fahrzeug) und/oder zum Festlegen einer Abholposition und eines Abholzeitraums für eine Abholung einer Sendung (z.B. aus einer mobilen Sendungsaufnahmevorrichtung wie einem Fahrzeug).

Ferner umfasst das zweite Verfahren gemäß dieser beispielhaften Ausführungsform der Erfindung folgendes:
- Erhalten einer Zustell- und/oder Abholzeitrauminformation von der Benutzervorrichtung an der Zustellungsdienstvorrichtung, und
- Kommunizieren der Zustell- und/oder Abholpositionsinformation an die Zustellervorrichtung.

Beispielsweise ist die weitere Benutzerschnittstelle ein Benutzereingabeelement. Zum Beispiel ist die weitere Benutzerschnittstelle ein Benutzereingabeelement einer Benutzeroberfläche der Benutzervorrichtung. Zum Beispiel ist die weitere Benutzerschnittstelle ein Benutzereingabeelement einer graphischen Benutzeroberfläche. Ein solches Benutzereingabeelement einer graphischen Benutzeroberfläche wird beispielsweise durch das Anzeigen auf einem Anzeigemittel der Benutzervorrichtung bereitgestellt.

Unter einem Benutzereingabeelement soll beispielsweise ein Element einer graphischen Benutzeroberfläche verstanden werden, dass zur Aufnahme von Informationen durch den Benutzer dient, wie ein Eingabefeld und/oder ein Auswahlelement. Ein solches Element einer graphischen Benutzeroberfläche wird beispielsweise durch das Anzeigen auf einem Anzeigemittel der Benutzervorrichtung bereitgestellt. Beispielsweise umfasst die weitere Benutzerschnittstelle ein Eingabefeld und/oder ein Auswahlelement, beispielsweise ein Eingabefeld und/oder ein Auswahlelement einer graphischen Benutzeroberfläche.

Durch ein Eingabefeld sind beispielsweise mit Hilfe eines geeigneten Eingabemittels wie einer Tastatur Textinformationen (z.B. Buchstaben und/oder Zahlen wie Start- und Endzeitpunkte und/oder Zeitrauminformationen) durch einen Benutzer eingebbar. Durch die Auswahl einer oder mehrerer Auswahlmöglichkeiten eines Auswahlelementes mit Hilfe eines geeigneten Eingabemittels (z.B. einer Maus, einem Trackball, einem Joystick, einem Touchpad, einer Tastatur und/oder eines berührungsempfindlichen Bildschirms) sind beispielsweise Auswahlinformationen (z.B. Start- und Endzeitpunkte und/oder Zeitrauminformationen) durch einen Benutzer eingebbar (z.B. durch "Anklicken" und/oder "Manipulieren" der jeweiligen Auswahlmöglichkeiten auswählbar).

Das Erhalten einer Zustell- und/oder Abholzeitrauminformation durch die weitere Benutzerschnittstelle an der Benutzervorrichtung gemäß dem ersten Verfahren erfolgt beispielsweise durch das Erfassen einer entsprechenden Benutzereingabe durch ein geeignetes Eingabemittel der Benutzervorrichtung. Zum Beispiel durch das Erfassen einer Eingabe von Text in ein Eingabefeld mit Hilfe einer Tastatur und/oder das Erfassen des Auswählens einer oder mehrerer Auswahlmöglichkeiten eines Auswahlelements durch eine Maus, einen Trackball, einen Joystick, einen Touchpad, eine Tastatur und/oder einen berührungsempfindlichen Bildschirm.

Die Zustell- und/oder Abholzeitrauminformation wird gemäß dem ersten Verfahren beispielsweise über eine Kommunikationsverbindung von der Benutzervorrichtung an die Zustellungsdienstvorrichtung kommuniziert, beispielsweise über eine Kommunikationsverbindung von der Benutzervorrichtung an die Zustellungsdienstvorrichtung gesendet. Zum Beispiel wird die Zustell- und/oder Abholzeitrauminformation gemeinsam mit der Zustell- und/oder Abholpositionsinformation und/oder über dieselbe Kommunikationsverbindung wie die Zustell- und/oder Abholpositionsinformation von der Benutzervorrichtung an die Zustellungsdienstvorrichtung kommuniziert. Wie oben offenbart, umfasst die Benutzervorrichtung zum Beispiel eine oder mehrere entsprechende Kommunikationsmittel.

Unter dem Erhalten der Zustell- und/oder Abholzeitrauminformation von der Benutzervorrichtung an der Zustellungsdienstvorrichtung gemäß dem zweiten Verfahren soll beispielsweise verstanden werden, dass die Zustell- und/oder Abholzeitrauminformation über eine Kommunikationsverbindung von der Benutzervorrichtung an der Zustellungsdienstvorrichtung empfangen wird. Zum Beispiel wird die Zustell- und/oder Abholzeitrauminformation gemeinsam mit der Zustell- und/oder Abholpositionsinformation und/oder über dieselbe Kommunikationsverbindung wie die Zustell- und/oder Abholpositionsinformation von der Benutzervorrichtung an der Zustellungsdienstvorrichtung erhalten. Wie oben offenbart, umfasst die Zustellungsdienstvorrichtung zum Beispiel eine oder mehrere entsprechende Kommunikationsmittel.

Die Zustell- und/oder Abholzeitrauminformation wird gemäß dem zweiten Verfahren ferner beispielsweise über eine Kommunikationsverbindung von der Zustellungsdienstvorrichtung an die Zustellervorrichtung kommuniziert, beispielsweise über eine Kommunikationsverbindung von der Zustellungsdienstvorrichtung an die Zustellervorrichtung gesendet. Zum Beispiel wird die Zustell- und/oder Abholzeitrauminformation gemeinsam mit der Zustell- und/oder Abholpositionsinformation und/oder über dieselbe Kommunikationsverbindung wie die Zustell- und/oder Abholpositionsinformation von der Zustellungsdienstvorrichtung an die Zustellervorrichtung kommuniziert.

Zum Beispiel ist die Zustell- und/oder Abholzeitrauminformation mit einem Zustell-und/oder Abholzeitraum (z.B. einen Start- und einen Endzeitpunkt) für eine Zustellung und/oder Abholung einer Sendung (z.B. in und/oder aus einer mobilen Sendungsaufnahmevorrichtung wie einem Fahrzeug) assoziiert, beispielsweise gibt die Zustell- und/oder Abholzeitrauminformation einen Zustell- und/oder Abholzeitraum (z.B. einen Start- und einen Endzeitpunkt) für eine Zustellung und/oder Abholung der Sendung (z.B. in und/oder aus einer mobilen Sendungsaufnahmevorrichtung wie einem Fahrzeug) an. Ein Benutzer kann somit durch eine Eingabe über die weitere Benutzerschnittstelle neben einer Zustell-und/oder Abholposition, d.h. einer Position, an der oder in deren Nähe eine Zustellung und/oder Abholung einer Sendung stattfinden soll, auch einen Zustellungszeitraum, d.h. einen Zeitraum, in dem eine Zustellung einer Sendung (z.B. in ein Fahrzeug) stattfinden soll, festlegen.

Diese beispielhafte Ausführungsform der Erfindung ist daher beispielsweise vorteilhaft, um den Komfort und die Flexibilität der Zustellung einer Sendung in eine mobile Sendungsaufnahmevorrichtung und der Abholung einer Sendung aus einer mobilen Sendungsaufnahmevorrichtung für den Benutzer weiter zu erhöhen.

Gemäß einer beispielhaften Ausführungsform der Erfindung umfasst das zweite Verfahren ferner folgendes:
- Erzeugen und/oder Auswählen einer Zugangsberechtigungsinformation zumindest teilweise in Abhängigkeit der erhaltenen Zustell- und/oder Abholpositionsinformation und/oder der erhaltenen Zustell- und/oder Abholzeitrauminformation,
- Kommunizieren der erzeugten und/oder ausgewählten Zugangsberechtigungsinformation an die Zustellervorrichtung.

Zum Beispiel weist die Zugangsberechtigungsinformation eine beschränkte zeitliche und/oder räumliche Gültigkeit auf. Zum Beispiel ist die Zugangsberechtigungsinformation für eine beschränkte Anzahl von Zugängen gültig, beispielsweise nur für einen einzigen Zugang (z.B. in eine bestimmte Sendungsaufnahmevorrichtung wie ein bestimmtes Fahrzeug).

Die Zugangsberechtigungsinformation enthält zum Beispiel ein oder mehrere Zugangsberechtigungsparameter. Dabei kann es sich beispielsweise um eine (insbesondere eindeutige) Kennung für eine Zugangsberechtigungsprüfvorrichtung (z.B. eine Zugangsberechtigungsprüfvorrichtung einer Sendungsaufnahmevorrichtung wie einem Fahrzeug), eine (insbesondere eindeutige) Kennung für die Zugangsberechtigungsinformation selbst, zeitliche Gültigkeitsinformationen (z.B. in Form eines "Nicht-Vor-Datums", eines "Nicht-Nach-Datums", einer "Startzeit des Tages" und einer "Endzeit des Tages", die angeben, innerhalb welcher Tage und innerhalb welcher Tageszeit Zugang für die Zustellung gewährt werden darf, beispielsweise vom 27.3.2014 00:00:00 Uhr bis zum 28.3.2014 23:59:59 Uhr), eine räumliche Gültigkeitsinformation (z.B. in Form eines Radius um eine Zustellkoordinate und/oder Zustell- und/oder Abholposition, in dem Zugang gewährt werden darf), eine Obergrenze der erlaubten Nutzungen der Zugangsberechtigungsinformation, um Zugang zu erhalten, und einer Information, in welchem Ausmaß Zugang gewährt werden darf (also beispielsweise ob alle Türen einer Sendungsaufnahmevorrichtung wie einem Fahrzeug geöffnet werden dürfen, oder nur eine oder eine bestimmte Gruppe).

Die zeitlichen Gültigkeitsinformationen definieren beispielsweise einen Zustell-und/oder Abholzeitraum, in dem die Zugangsberechtigungsinformation gültig ist und zum Zugang (z.B. in eine Sendungsaufnahmevorrichtung wie ein Fahrzeug) berechtigt. Die räumlichen Gültigkeitsinformationen definieren beispielsweise eine Zustell-und/oder Abholposition und/oder einen Zustell- und/oder Abholbereich (z.B. einen Radius um eine Zustell- und/oder Abholposition), in dem die Zugangsberechtigungsinformation gültig ist und zum Zugang (z.B. in eine Sendungsaufnahmevorrichtung wie ein Fahrzeug) berechtigt. Dies ist beispielsweise vorteilhaft, um die Sicherheit zu erhöhen und beispielsweise dem Benutzer die Möglichkeit zu gegeben, den Zugang zu der Sendungsaufnahmevorrichtung (z.B. einem Fahrzeug) für den Zusteller zeitlich und/oder räumlich zu beschränken.

Unter Erzeugen und/oder Auswählen einer Zugangsberechtigungsinformation zumindest teilweise in Abhängigkeit der erhaltenen Zustell- und/oder Abholpositionsinformation und/oder der erhaltenen Zustell- und/oder Abholzeitrauminformation soll beispielsweise verstanden werden, dass die Zugangsberechtigungsinformation derart erzeugt und/oder ausgewählt wird, dass die Zugangsberechtigungsinformation an der mit der Zustell- und/oder Abholpositionsinformation assoziierten Zustell- und/oder Abholposition und/oder innerhalb des mit der Zustell- und/oder Abholzeitrauminformation assoziierten Zeitraums gültig ist. Zum Beispiel liegt die mit der Zustell- und/oder Abholpositionsinformation assoziierten Zustell- und/oder Abholposition innerhalb eines von den räumlichen Gültigkeitsinformationen der Zugangsberechtigungsinformation definierten Zustell- und/oder Abholbereichs. Zum Beispiel entspricht der mit der Zustell- und/oder Abholzeitrauminformation assoziierten Zustell- und/oder Abholzeitraum dem von den zeitlichen Gültigkeitsinformationen der Zugangsberechtigungsinformation definierten Zustell-und/oder Abholzeitraum.

Die Zugangsberechtigungsinformation wird gemäß dem zweiten Verfahren ferner beispielsweise über eine Kommunikationsverbindung von der Zustellungsdienstvorrichtung an die Zustellervorrichtung kommuniziert, beispielsweise über eine Kommunikationsverbindung von der Zustellungsdienstvorrichtung an die Zustellervorrichtung gesendet. Zum Beispiel wird die Zugangsberechtigungsinformation gemeinsam mit der Zustell- und/oder Abholpositionsinformation und/oder über dieselbe Kommunikationsverbindung wie die Zustell- und/oder Abholpositionsinformation von der Zustellungsdienstvorrichtung an die Zustellervorrichtung kommuniziert.

Die Zugangsberechtigungsinformation berechtigt beispielsweise zum Zugang für eine Zustellung einer Sendung in eine Sendungsaufnahmevorrichtung wie ein Fahrzeug. Zum Beispiel berechtigt die Zugangsberechtigungsinformation ausschließlich zum Zugang für eine Zustellung einer Sendung in eine Sendungsaufnahmevorrichtung. Zum Beispiel prüfen Zugangsberechtigungsprüfmittel einer Sendungsaufnahmevorrichtung, ob die Zugangsberechtigungsinformation zum Zugang berechtigt, bevor Zugang zu dem Fahrzeug gewährt wird. Zum Beispiel wird zumindest eine vordefinierte Menge (z.B. alle, oder nur einige) der oben offenbarten Zugangsberechtigungsparameter hinsichtlich jeweiliger Bezugsinformationen (z.B. aktuelle Uhrzeit und/oder aktuelle Position der Sendungsaufnahmevorrichtung) darauf geprüft, ob sie jeweils zum Zugang berechtigen.

Gemäß einer beispielhaften Ausführungsform der Erfindung umfasst das zweite Verfahren ferner folgendes:
- Bereitstellen des Computerprogramms umfassend Programmanweisungen, die einen Prozessor zur Ausführung und/oder Steuerung des ersten Verfahrens veranlassen, wenn das Computerprogramm auf dem Prozessor läuft, zum Erhalten an der Benutzervorrichtung.

Unter Bereitstellen des Computerprogramms zum Erhalten an der Benutzervorrichtung soll beispielsweise verstanden werden, dass das Computerprogramm derart bereitgestellt wird, dass die Benutzervorrichtung das Computerprogramm über eine Kommunikationsverbindung erhalten kann, beispielsweise über eine Kommunikationsverbindung herunterladen kann. Zum Beispiel kann das Computerprogramm durch das Verfügbarmachen des Computerprogramms zum Herunterladen über das Internet zum Erhalten durch die Benutzervorrichtung bereitgestellt werden. Zum Beispiel wird das Computerprogramm zum Herunterladen über das Internet durch das Speichern und/oder Hochladen des Computerprogramms auf eine Filehosting- und/oder Filesharing-Plattform im Internet (z.B. Dropbox) und/oder in eine App-Shop-Plattform im Internet (z.B. App Store (i0S), Windows Phone Store oder Google Play) verfügbar gemacht.

Gemäß einer beispielhaften Ausführungsform der Erfindung beruht die Zustell-und/oder Abholpositionsinformation und/oder die Zustell- und/oder Abholzeitrauminformation zumindest teilweise auf einer Benutzereingabe eines Benutzers an der Benutzervorrichtung (z.B. einer durch Eingabemittel der Benutzervorrichtung erfasste Benutzereingabe).

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: ein Blockschaltbild der elektronischen Komponenten einer beispielhaften Ausführungsform einer erfindungsgemäßen Benutzervorrichtung;
- Fig. 2: ein Blockschaltbild der elektronischen Komponenten einer beispielhaften Ausführungsform einer erfindungsgemäßen Zustellungsdienstvorrichtung;
- Fig. 3: ein Blockschaltbild einer beispielhaften Ausführungsform eines erfindungsgemäßen Systems;
- Fig. 4: eine schematische Darstellung einer beispielhaften Ausführungsform einer bereitgestellten Benutzerschnittstelle einer graphischen Benutzeroberfläche einer erfindungsgemäßen Benutzervorrichtung;
- Fig. 5: ein Flussdiagramm eines Beispiels des erfindungsgemäßen ersten Verfahrens; und
- Fig. 6: ein Flussdiagramm eines Beispiels des erfindungsgemäßen zweiten Verfahrens.

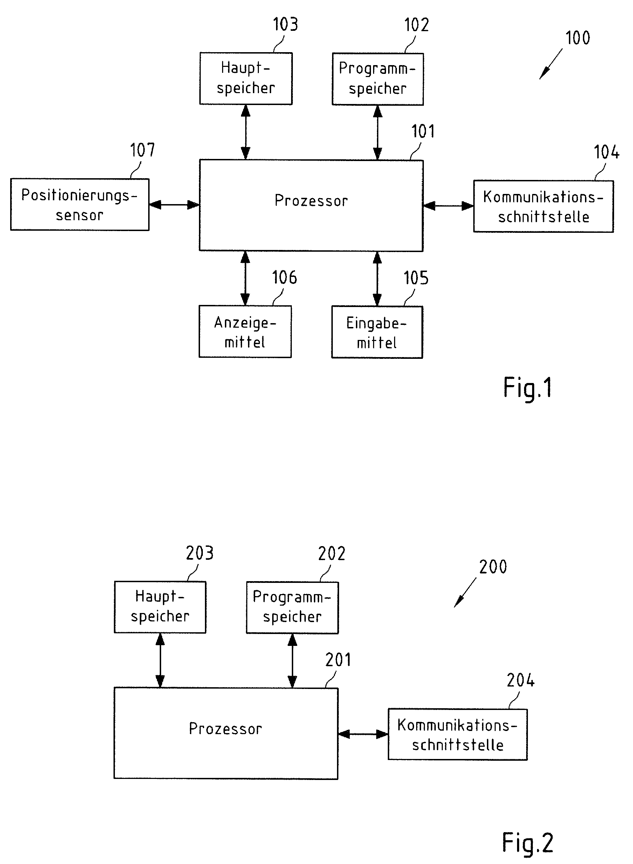

Fig. 1 ist ein Blockschaltbild einer beispielhaften Ausführungsform der erfindungsgemäßen Benutzervorrichtung 100.

Prozessor 101 der Benutzervorrichtung 100 ist insbesondere als Mikrocontroller oder Mikroprozessor ausgebildet. Prozessor 101 führt Programmanweisungen aus, die in Programmspeicher 102 gespeichert sind, und speichert beispielsweise Zwischenergebnisse oder ähnliches in Hauptspeicher 103. Zum Beispiel ist Programmspeicher 102 ein nicht-flüchtiger Speicher wie ein Flash-Speicher, ein Magnetspeicher, ein EEPROM-Speicher, ein persistenter Speicher wie ein ROM-Speicher und/oder ein optischer Speicher. Hauptspeicher 103 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Vorzugsweise sind Programmspeicher 102 und Hauptspeicher 103 zusammen mit Prozessor 101 in einem Modul angeordnet.

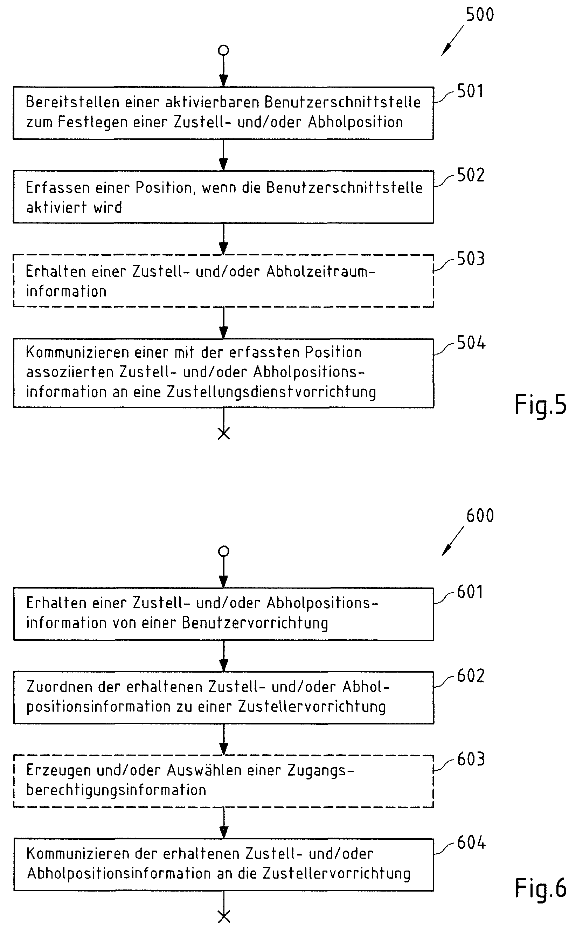

In Programmspeicher 102 sind beispielsweise Programmanweisungen gespeichert, die den Prozessor 101, wenn er die Programmanweisungen ausführt, veranlassen, zumindest teilweise das in Fig. 5 dargestellte Verfahren auszuführen und/oder zu steuern.

Die drahtlose Kommunikationsschnittstelle 104 ist zum Beispiel eingerichtet, gemäß einer oder mehreren drahtlosen Kommunikationstechniken zu kommunizieren. Im Folgenden wird beispielhaft angenommen, dass die drahtlose Kommunikationsschnittstelle 104 die Kommunikation über ein Mobilfunknetz unterstützt. Zum Beispiel wird die drahtlose Kommunikationsschnittstelle 104 zumindest teilweise durch einen Sendeempfänger der Mobilfunktechnik und eine oder mehrere Antennen gebildet. Wie oben offenbart, ist ein Beispiel für eine Mobilfunktechnik GSM, UMTS und/oder LTE.

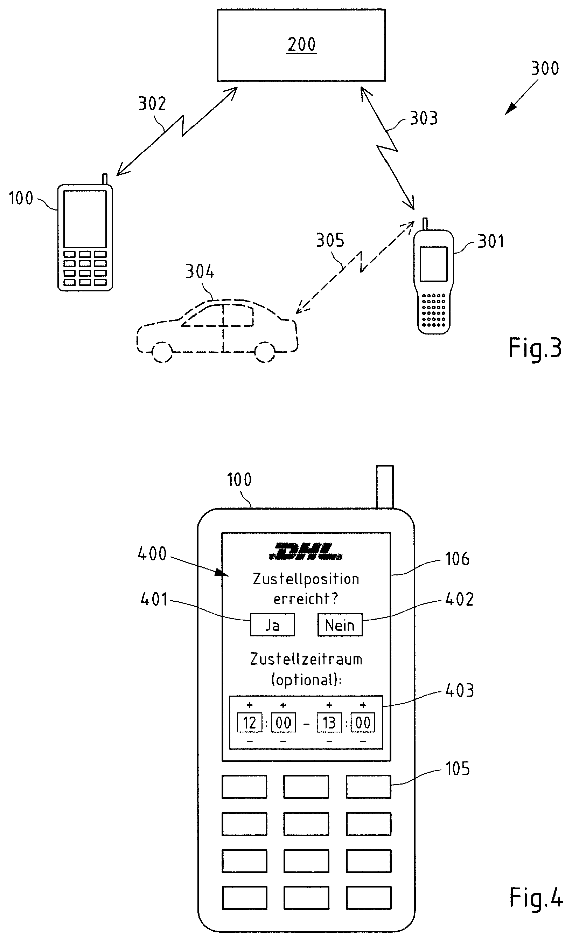

Der Prozessor 101 kann beispielsweise über die drahtlose Kommunikationsschnittstelle 104 mit anderen Vorrichtungen wie einer Zustellungsdienstvorrichtung (z.B. der Zustellungsdienstvorrichtung 200 in Fig. 3) kommunizieren. Prozessor 101 ist beispielsweise operativ mit der drahtlosen Kommunikationsschnittstelle 104 verbunden. Beispielsweise kann die drahtlose Kommunikationsschnittstelle 104 Informationen von anderen Vorrichtungen empfangen oder abfragen und an Prozessor 101 weiterleiten und/oder Informationen von Prozessor 101 empfangen und an andere Vorrichtungen senden. Zum Beispiel steuert Prozessor 101 die Kommunikationsschnittstelle 104 zumindest teilweise.

Das Eingabemittel 105 ist beispielsweise eingerichtet, Benutzereingaben eines Benutzers zu erfassen und an den Prozessor 101 weiterzuleiten. Prozessor 101 ist beispielsweise operativ mit dem Eingabemittel 105 verbunden. Zum Beispiel steuert Prozessor 101 das Eingabemittel 105 zumindest teilweise. Im Folgenden wird beispielhaft davon ausgegangen, dass das Eingabemittel 105 eine Tastatur ist, beispielsweise eine numerische Tastatur oder eine alphanumerische Tastatur. Zusätzlich oder alternativ kann die Benutzervorrichtung 100 auch andere Eingabemittel wie eine Maus, einen Trackball, einen Joystick, ein Touchpad, und/oder einen berührungsempfindlichen Bildschirm aufweisen.

Das Anzeigemittel 106 ist beispielsweise eingerichtet, Informationen von dem Prozessor 101 zu empfangen und anzuzeigen. Prozessor 101 ist beispielsweise operativ mit dem Anzeigemittel 106 verbunden. Zum Beispiel steuert Prozessor 101 das Anzeigemittel 106 zumindest teilweise. Zum Beispiel ist das Anzeigemittel 106 eingerichtet, eine graphische Benutzeroberfläche der Benutzervorrichtung 100 anzuzeigen (z.B. wenn das Anzeigemittel 106 von dem Prozessor 101 entsprechend angesteuert wird). Im Folgenden wird beispielhaft davon ausgegangen, dass das Anzeigemittel 106 ein berührungsempfindlicher Bildschirm ist. Zusätzlich oder alternativ kann die Benutzervorrichtung 100 auch weitere Anzeigemittel aufweisen.

Der Positionierungssensor 107 dient beispielsweise zum Erfassen der räumlichen und/oder geographischen Position der Benutzervorrichtung 100. Ein Beispiel für einen solchen Positionierungssensor ist ein Sensor eines satellitengestützten Positionierungssystems wie ein Global-Positioning-System-Sensor (GPS-Sensor), ein GLONASS-Sensor und/oder ein Galileo-Sensor. Der Positionierungssensor 107 ist beispielsweise eingerichtet, die Position der Benutzervorrichtung 100 zu erfassen und eine entsprechende Positionsinformation (z.B. eine Positionsangabe und/oder einer Koordinatenangabe der erfassten Position) an den Prozessor 101 weiterzuleiten.

Im Folgenden wird beispielhaft davon ausgegangen, dass die Benutzervorrichtung 100 ein Mobiltelefon ist. Die Erfindung ist jedoch nicht hierauf beschränkt. Alternativ kann die Benutzervorrichtung beispielsweise auch ein PDA, ein Medienabspielgerät (z.B. ein iPod), ein Navigationsgerät (z.B. ein Navigationsgerät für ein Fahrzeug, z.B. ein festeingebautes Navigationsgerät eines Fahrzeugs oder ein tragbares Navigationsgerät), ein Notebook-Computer und/oder ein Tablet-Computer sein.

Fig. 2 ist ein Blockschaltbild einer beispielhaften Ausführungsform der erfindungsgemäßen Zustellungsdienstvorrichtung 200.

Prozessor 201 der Zustellungsdienstvorrichtung 200 ist insbesondere als Mikrocontroller oder Mikroprozessor ausgebildet. Prozessor 201 führt Programmanweisungen aus, die in Programmspeicher 202 gespeichert sind, und speichert beispielsweise Zwischenergebnisse oder ähnliches in Hauptspeicher 203. Zum Beispiel ist Programmspeicher 202 ein nicht-flüchtiger Speicher wie ein Flash-Speicher, ein Magnetspeicher, ein EEPROM-Speicher, ein persistenter Speicher wie ein ROM-Speicher und/oder ein optischer Speicher. Hauptspeicher 203 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Vorzugsweise sind Programmspeicher 202 und Hauptspeicher 203 zusammen mit Prozessor 201 in einem Modul angeordnet.

In Programmspeicher 202 sind beispielsweise Programmanweisungen gespeichert, die den Prozessor 201, wenn er die Programmanweisungen ausführt, veranlassen, zumindest teilweise das in Fig. 6 dargestellte Verfahren auszuführen und/oder zu steuern.

Die Kommunikationsschnittstelle 204 ist zum Beispiel eingerichtet, gemäß einer oder mehreren drahtlosen Kommunikationstechniken zu kommunizieren. Alternativ oder zusätzlich ist die Kommunikationsschnittstelle 204 zum Beispiel eingerichtet, gemäß einer oder mehreren drahtgebundenen Kommunikationstechniken zu kommunizieren. Im Folgenden wird beispielhaft angenommen, dass die Kommunikationsschnittstelle 204 die Kommunikation über ein Mobilfunknetz unterstützt. Zum Beispiel wird die drahtlose Kommunikationsschnittstelle 204 zumindest teilweise durch einen Sendeempfänger der Mobilfunktechnik und eine oder mehrere Antennen gebildet. Wie oben offenbart, ist ein Beispiel für eine Mobilfunktechnik GSM, UMTS und/oder LTE.

Der Prozessor 201 kann beispielsweise über die Kommunikationsschnittstelle 204 mit anderen Vorrichtungen wie einer Benutzervorrichtung (z.B. der Benutzervorrichtung 100 in Fig. 3) kommunizieren. Prozessor 201 ist beispielsweise operativ mit der Kommunikationsschnittstelle 204 verbunden. Beispielsweise kann die Kommunikationsschnittstelle 204 Informationen von anderen Vorrichtungen empfangen oder abfragen und an Prozessor 201 weiterleiten und/oder Informationen von Prozessor 201 empfangen und an andere Vorrichtungen senden. Zum Beispiel steuert Prozessor 201 die Kommunikationsschnittstelle 204 zumindest teilweise.

Alternativ oder zusätzlich kann die Kommunikationsschnittstelle 204 beispielsweise auch separat von der Zustellungsdienstvorrichtung 200 sein.

Im Folgenden wird beispielhaft davon ausgegangen, dass die Zustellungsdienstvorrichtung 200 ein Server eines Zustellungsdienstes ist.

Fig. 3 zeigt eine beispielhafte Ausführungsform eines erfindungsgemäßen Systems 300. Das System 300 umfasst die Benutzervorrichtung 100, die Zustellungsdienstvorrichtung 200 und eine tragbare Zustellervorrichtung 301.

Die Zustellervorrichtung 301 ist beispielsweise ein von dem mit der Zustellung der Sendung in das Fahrzeug betrauten Zustellers eines Zustelldienstes elektronisches Gerät. Ein Beispiel für die Zustellervorrichtung 301 ist zum Beispiel ein Zustellergerät eines Zustelldienstes wie ein Handscanner, beispielsweise der Dolphin 99EX Mobile Computer der Firma Honeywell.

Die Benutzervorrichtung 100 und die Zustellungsdienstvorrichtung 200 sind in System 300 über die Kommunikationsverbindung 302 verbunden. Zum Beispiel ist die Kommunikationsschnittstelle 104 der Benutzervorrichtung 100 eingerichtet, über Kommunikationsverbindung 302 mit Zustellungsdienstvorrichtung 200 zu kommunizieren, beispielsweise Informationen (z.B. Zustell- und Abholpositionsinformationen und/oder Zustell- und Abholzeitrauminformationen) an die Zustellungsdienstvorrichtung 200 zu senden und/oder von der Zustellungsdienstvorrichtung 200 zu empfangen. Ferner ist die Kommunikationsschnittstelle 204 der Zustellungsdienstvorrichtung 200 eingerichtet, über Kommunikationsverbindung 302 mit Benutzervorrichtung 100 zu kommunizieren, beispielsweise Informationen an die Benutzervorrichtung 100 zu senden und/oder von der Benutzervorrichtung 100 zu empfangen. Im Folgenden wird beispielhaft davon ausgegangen, dass die Kommunikationsverbindung 302 eine drahtlose Kommunikationsverbindung über ein Mobilfunknetz umfasst.

Die Zustellungsdienstvorrichtung 200 und die Zustellervorrichtung 301 sind in System 300 über die Kommunikationsverbindung 303 verbunden. Zum Beispiel ist die Kommunikationsschnittstelle 204 der Zustellungsdienstvorrichtung 200 eingerichtet, über Kommunikationsverbindung 303 mit Zustellervorrichtung 301 zu kommunizieren, beispielsweise Informationen (z.B. Zustell- und Abholpositionsinformationen, Zustell- und Abholzeitrauminformationen und/oder Zugangsberechtigungsinformationen) an die Zustellervorrichtung 301 zu senden und/oder von der Zustellervorrichtung 301 zu empfangen. Im Folgenden wird beispielhaft davon ausgegangen, dass die Kommunikationsverbindung 303 eine drahtlose Kommunikationsverbindung über ein Mobilfunknetz umfasst.

Ferner umfasst das System 300 optional das Fahrzeug 304. Das Fahrzeug 304 in System 300 ist ein Beispiel für eine mobile Sendungsaufnahmevorrichtung. Die Erfindung ist jedoch nicht hierauf beschränkt.

Das Fahrzeug 304 und die Zustellervorrichtung 301 sind in System 300 optional über die Kommunikationsverbindung 305 verbunden. Zum Beispiel kann die Zustellervorrichtung 301 über die Kommunikationsverbindung 305 Informationen (z.B. Zugangsberechtigungsinformationen) an das Fahrzeug 304 senden und/oder von dem Fahrzeug 304 empfangen. Im Folgenden wird beispielhaft davon ausgegangen, dass die Kommunikationsverbindung 305 eine drahtlose Kommunikationsverbindung über ein lokales Funknetz umfasst.

Die Kommunikationsverbindungen 302, 303 und 305 sind in Fig. 3 beispielhaft als drahtlose Kommunikationsverbindungen dargestellt. Es ist jedoch beispielsweise auch denkbar, dass die Kommunikationsverbindungen 302, 303 und/oder 305 nicht ausschließlich drahtlose Kommunikationsverbindungen sind, beispielsweise umfasst zumindest eine der Kommunikationsverbindungen 302, 303 und/oder 305 zumindest eine drahtgebundene Kommunikationsverbindung und zumindest eine drahtlose Kommunikationsverbindung.

Fig. 4 zeigt eine schematische Darstellung einer beispielhaften Ausführungsform einer bereitgestellten Benutzerschnittstelle einer graphischen Benutzeroberfläche 400 der Benutzervorrichtung 100.

In der Darstellung von Fig. 4 wird die graphische Benutzeroberfläche 400 auf den Anzeigemitteln 106 der Benutzervorrichtung 100 angezeigt. Wie oben offenbart, wird im Folgenden beispielhaft davon ausgegangen, dass das Anzeigemittel 106 ein berührungsempfindlicher Bildschirm ist.

Die graphische Benutzeroberfläche 400 umfasst eine mit "Ja" beschriftete Tastenschaltfläche 401 und eine mit "Nein" beschriftete Tastenschaltfläche 402. Die Tastenschaltflächen 401 und 402 sind aktivierbare Benutzerschnittstellen, die durch eine Benutzereingabe wie eine Berührung an der Anzeigestelle auf dem Anzeigemittel 106, an der die jeweilige Tastenschaltfläche 401 und 402 angezeigt wird, aktivierbar sind. Die Tastenschaltfläche 401 dient beispielsweise zur Bestätigung, dass eine Zustell- und/oder Abholposition erreicht wurde. Zum Beispiel sind die Anzeigemittel 106 eingerichtet, eine Berührung an einer Anzeigestelle der Tastenschaltfläche 401 oder 402 zu erfassen und entsprechende Informationen an den Prozessor 101 weiterzuleiten. Zum Beispiel ist der Prozessor 101 eingerichtet, das Erfassen einer solchen Berührung durch die Anzeigemittel 106 als Aktivierung der jeweiligen Tastenschaltfläche zu interpretieren.

Ferner umfasst die Benutzeroberfläche 400 das optionale Auswahlelement 403. Das optionale Auswahlelement 403 dient zur Auswahl eines Startzeitpunktes und eines Endzeitpunktes eines Zustellzeitraums durch entsprechende Benutzereingabe wie eine oder mehrere Berührungen auf dem Anzeigemittel 106 und/oder eine oder mehrere Eingaben auf dem Eingabemittel 105. Zum Beispiel sind das Anzeigemittel 106 und/oder das Eingabemittel 105 eingerichtet, solche Benutzereingaben zu erfassen und entsprechende Informationen an den Prozessor 101 weiterzuleiten. Zum Beispiel ist der Prozessor 101 eingerichtet, das Erfassen solcher Benutzereingaben durch die Anzeigemittel 106 und/oder die Eingabemittel 105 als Auswahl eines Startzeitpunktes und eines Endzeitpunktes eines Zustellzeitraums zu interpretieren.

Fig. 5 zeigt ein Flussdiagramm 500 eines Beispiels des erfindungsgemäßen ersten Verfahrens. Die im Flussdiagramm 500 dargestellten Schritte werden von Mitteln der Benutzervorrichtung 100 ausgeführt und/oder gesteuert. Beispielsweise werden die Schritte zumindest teilweise von dem Prozessor 101 der Benutzervorrichtung 100 ausgeführt und/oder gesteuert. Im Folgenden wird für die Erläuterung des Flussdiagramms 500 beispielhaft Bezug auf das System 300 und die graphische Benutzeroberfläche 400 genommen.

In einem Schritt 501 wird eine aktivierbare Benutzerschnittstelle zum Festlegen einer Zustell- und/oder Abholposition bereitgestellt. Optional wird in Schritt 501 beispielsweise eine weitere Benutzerschnittstelle zum Festlegen eines Zustell-und/oder Abholzeitraums bereitgestellt.

Zum Beispiel wird in Schritt 501 die graphische Benutzeroberfläche 400 mit den Tastenschaltflächen 401 und 402 und dem optionalen Auswahlelement 406 auf dem Anzeigemittel 106 der Benutzervorrichtung 100 angezeigt. Zum Beispiel steuert Prozessor 101 der Benutzervorrichtung 100 das Anzeigemittel 106 an, um das Anzeigen der graphischen Benutzeroberfläche 400 auf dem Anzeigemittel 106 zu bewirken.

Wie oben zu Fig. 4 offenbart, sind die Tastenschaltflächen 401 und 402 aktivierbare Benutzerschnittstellen, die durch eine Benutzereingabe wie eine Berührung an der Anzeigestelle auf dem Anzeigemittel 106, an der die jeweilige Tastenschaltfläche 401 und 402 angezeigt wird, aktivierbar sind. Zum Beispiel ist das Anzeigemittel 106 eingerichtet, eine solche Berührung an einer Anzeigestelle zu erfassen und entsprechende Informationen an den Prozessor 101 weiterzuleiten. Zum Beispiel ist der Prozessor 101 eingerichtet, das Erfassen einer solchen Berührung durch das Anzeigemittel 106 als Aktivierung der jeweiligen Tastenfläche zu interpretieren.

Das optionale Auswahlelement 403 ist eine weitere Benutzerschnittstelle, die zur Auswahl eines Startzeitpunktes und eines Endzeitpunktes eines Zustellzeitraums durch entsprechende Benutzereingabe wie eine oder mehrere Berührungen auf dem Anzeigemittel 106 und/oder eine oder mehrere Eingaben auf dem Eingabemittel 105 dient. Zum Beispiel sind das Anzeigemittel 106 und/oder das Eingabemittel 105 eingerichtet, solche Benutzereingaben zu erfassen und entsprechende Informationen an den Prozessor 101 weiterzuleiten. Zum Beispiel ist der Prozessor 101 eingerichtet, das Erfassen solcher Benutzereingaben durch das Anzeigemittel 106 und/oder das Eingabemittel 105 als Auswahl eines Startzeitpunktes und eines Endzeitpunktes eines Zeitraums zu interpretieren.

In einem Schritt 502 wird eine Position der Benutzervorrichtung (z.B. der Benutzervorrichtung 100) erfasst, wenn die Benutzerschnittstelle zum Festlegen einer Zustell- und/oder Abholposition (z.B. die Tastenschaltfläche 401) aktiviert wird.

Schritt 502 wird beispielsweise erst dann ausgeführt, wenn die Benutzerschnittstelle zum Festlegen einer Zustell- und/oder Abholposition (z.B. die Tastenschaltfläche 401) aktiviert wird. In dem Beispiel der graphischen Benutzerfläche 400 wird Schritt 502 beispielsweise nur dann ausgeführt und die Position der Benutzervorrichtung 100 erfasst, wenn die mit "Ja" beschriftete Tastenschaltfläche 401 der graphischen Benutzeroberfläche aktiviert wird, nicht jedoch wenn die mit "Nein" beschriftete Tastenschaltfläche 402 aktiviert wird. Denn durch die Aktivierung der Tastenschaltfläche 401 bestätigt der Benutzer, dass die Zustell- und/oder Abholposition erreicht wurde.

Zum Beispiel wird die Position der Benutzervorrichtung 100 in Schritt 502 durch den Positionierungssensor 107 erfasst. Zum Beispiel ist der Prozessor 101 eingerichtet, den Positionierungssensor 107 anzusteuern, um das Erfassen der Position der Benutzervorrichtung 100 durch den Positionierungssensor 107 zu bewirken, sobald die Benutzerschnittstelle zum Festlegen einer Zustell- und/oder Abholposition (z.B. die Tastenschaltfläche 401) aktiviert wurde.

Zum Beispiel wünscht der Benutzer der Benutzervorrichtung 100, dass eine Sendung in sein Fahrzeug 304 zugestellt oder aus seinem Fahrzeug 304 abgeholt werden soll. Zum Beispiel soll die Sendung in das Fahrzeug 304 zugestellt oder daraus abgeholt werden, solange das Fahrzeug 304 sich an einer bestimmten Position befindet, beispielsweise auf einem Parkplatz abgestellt ist. Um diese Position als Zustell-und/oder Abholposition festzulegen, kann der Benutzer beispielsweise die Tastenschaltfläche 401 aktivieren, sobald er sich an (oder in der Nähe) dieser Position befindet. Zum Beispiel aktiviert der Benutzer die Tastenschaltfläche 401, wenn er sich in dem abgestellten Fahrzeug 304 befindet oder unmittelbar nach dem er aus dem abgestellten Fahrzeug 304 ausgestiegen ist. Anschließend wird in Schritt 502 diese Position erfasst.

In einem optionalen Schritt 503 wird eine Zustell- und/oder Abholzeitrauminformation an der Benutzervorrichtung (z.B. der Benutzervorrichtung 100) erhalten.

Zum Beispiel wird die Zustell- und/oder Abholzeitrauminformation in Schritt 502 durch das Erfassen einer Eingabe eines Benutzers auf Eingabemittel 105 und/oder Anzeigemittel 106 der Benutzervorrichtung 100 erhalten (z.B. Benutzereingaben zur Auswahl eines Startzeitpunktes und eines Endzeitpunktes eines Zeitraums in dem optionalen Auswahlelement 403).

Im dem oben offenbarten Beispiel, dass der Benutzer der Benutzervorrichtung 100 wünscht, dass eine Sendung in sein Fahrzeug 304 zugestellt oder aus seinem Fahrzeug 304 abgeholt werden soll, kann der Benutzer durch Auswahlelement 403 einen Zustell- und/oder Abholzeitraum festlegen, in dem die Sendung an der in Schritt 502 erfassten Position (d.h. der Zustell- und/oder Abholposition) in das Fahrzeug 304 zugestellt oder daraus abgeholt werden kann. Der Zustell- und/oder Abholzeitraum entspricht beispielsweise der erwarteten Abstellzeit des Fahrzeugs 304 an der Zustell- und/oder Abholposition.

In einem Schritt 504 wird eine mit der in Schritt 502 erfassten Position assoziierte Zustell- und/oder Abholpositionsinformation an eine Zustellungsdienstvorrichtung (z.B. die Zustellungsdienstvorrichtung 200) kommuniziert. Optional zu der Zustell-und/oder Abholpositionsinformation kann in Schritt 504 beispielsweise auch eine in Schritt 503 erhaltene Zustell- und/oder Abholzeitrauminformation von der Benutzervorrichtung (z.B. der Benutzervorrichtung 100) an die Zustellungsdienstvorrichtung (z.B. die Zustellungsdienstvorrichtung 200) kommuniziert werden.

Zum Beispiel umfasst die Zustell- und/oder Abholpositionsinformation eine Positionsangabe und/oder Koordinatenangabe der in Schritt 502 erfassten Position (z.B. einer Abstellposition des Fahrzeugs 304). Ferner umfasst die Zustell- und/oder Abholpositionsinformation beispielsweise eine der Zustellung und/oder Abholung der Sendung zuordenbare Kennung, beispielsweise eine Kennung eines Benutzers der Benutzervorrichtung. Zum Beispiel ist in der Benutzervorrichtung 100 eine Kennung des Benutzers der Benutzervorrichtung 100 hinterlegt, beispielsweise in Programmspeicher 102 gespeichert. Zum Beispiel ist der Benutzer der Benutzervorrichtung 100 mit dieser Kennung bei dem Zustellungsdienst der Zustellungsdienstvorrichtung 200 registriert.

Die Zustell- und/oder Abholzeitrauminformation entspricht beispielsweise der in Schritt 503 erhaltenen Zustell- und/oder Abholzeitrauminformation. Die Zustell-und/oder Abholzeitrauminformation gibt zum Beispiel einen Start- und einen Endzeitpunkt eines Zeitraum, an dem eine Zustellung und/oder eine Abholung einer Sendung an der in Schritt 502 erfassten Position (z.B. einen erwarteten Abstellzeitraum des Fahrzeugs 304) erfolgen soll, an.

Die Zustell- und/oder Abholpositionsinformation (und optional die Zustell- und/oder Abholzeitrauminformation) wird in Schritt 504 beispielsweise über die Kommunikationsverbindung 302 von der Benutzervorrichtung 100 an die Zustellungsdienstvorrichtung 200 kommuniziert, zum Beispiel durch die Kommunikationsschnittstelle 104 gesendet.

Fig. 6 zeigt ein Flussdiagramm 600 eines Beispiels des erfindungsgemäßen zweiten Verfahrens. Die im Flussdiagramm 600 dargestellten Schritte werden von Mitteln der Zustellungsdienstvorrichtung 200 ausgeführt und/oder gesteuert. Beispielsweise werden die Schritte zumindest teilweise von dem Prozessor 201 der Zustellungsdienstvorrichtung 200 ausgeführt und/oder gesteuert. Im Folgenden wird für die Erläuterung des Flussdiagramms 600 beispielhaft Bezug auf das System 300 und die graphische Benutzeroberfläche 400 genommen.

In einem Schritt 601 wird eine Zustell- und/oder Abholpositionsinformation an einer Zustellungsdienstvorrichtung (z.B. der Zustellungsdienstvorrichtung 200) von einer Benutzervorrichtung (z.B. der Benutzervorrichtung 100) erhalten. Optional wird in Schritt 601 auch eine Zustell- und/oder Abholzeitrauminformation an der Zustellungsdienstvorrichtung (z.B. der Zustellungsdienstvorrichtung 200) von der Benutzervorrichtung (z.B. der Benutzervorrichtung 100) erhalten.

Zum Beispiel wird in Schritt 601 die Zustell- und/oder Abholpositionsinformation (und optional die Zustell- und/oder Abholzeitrauminformation) an der Zustellungsdienstvorrichtung (z.B. der Zustellungsdienstvorrichtung 200) erhalten, die in Schritt 504 von der Benutzervorrichtung (z.B. der Benutzervorrichtung 100) an die Zustellungsdienstvorrichtung (z.B. die Zustellungsdienstvorrichtung 200) kommuniziert wurde.

Zum Beispiel wird die Zustell- und/oder Abholpositionsinformation (und optional die Zustell- und/oder Abholzeitrauminformation) in Schritt 601 über die Kommunikationsverbindung 302 von der Benutzervorrichtung 100 an der Zustellungsdienstvorrichtung 200 erhalten, zum Beispiel durch die Kommunikationsschnittstelle 204 empfangen.

Zum Beispiel umfasst die Zustell- und/oder Abholpositionsinformation eine Positionsangabe und/oder Koordinatenangabe der in Schritt 502 erfassten Position. Ferner umfasst die Zustell- und/oder Abholpositionsinformation beispielsweise eine der Zustellung und/oder Abholung der Sendung zuordenbare Kennung, beispielsweise eine Kennung eines Benutzers der Benutzervorrichtung 100. Zum Beispiel ist der Benutzer der Benutzervorrichtung 100 mit dieser Kennung bei dem Zustellungsdienst der Zustellungsdienstvorrichtung 200 und/oder bei der Zustellungsdienstvorrichtung 200 registriert. Die Zustell- und/oder Abholzeitrauminformation entspricht beispielsweise der in Schritt 502 optional erhaltenen Zustell- und/oder Abholzeitrauminformation. Die Zustell- und/oder Abholzeitrauminformation gibt zum Beispiel einen Start- und einen Endzeitpunkt eines Zeitraum, an dem eine Zustellung und/oder eine Abholung einer Sendung an der in Schritt 502 erfassten Position (z.B. einen erwarteten Abstellzeitraum des Fahrzeugs 304) erfolgen soll, an.

In einem Schritt 602 wird die in Schritt 601 erhaltene Zustell- und/oder Abholpositionsinformation zu einer Zustellervorrichtung (z.B. der Zustellervorrichtung 301) zugeordnet. Optional wird in Schritt 602 die in Schritt 601 optional erhaltene Zustell- und/oder Abholzeitrauminformation ebenfalls zu der Zustellervorrichtung (z.B. der Zustellervorrichtung 301) zugeordnet.

Die Zuordnung erfolgt beispielsweise anhand einer in der Zustell- und/oder Abholpositionsinformation enthaltenen Kennung des Benutzers der Benutzervorrichtung 100. Zum Beispiel ist der Benutzer mit dieser Kennung beim Zustellungsdienst der Zustellungsdienstvorrichtung 200 und/oder bei der Zustellungsdienstvorrichtung 200 registriert. Zum Beispiel sind entsprechende Registrierungsinformationen in der Zustellungsdienstvorrichtung 200 hinterlegt, beispielsweise in Programmspeicher 202 gespeichert. Ferner sind in Zustellungsdienstvorrichtung 200 beispielsweise Informationen darüber hinterlegt, welcher Zusteller des Zustellungsdienstes mit einer Zustellung und/oder Abholung einer Sendung (z.B. in das oder aus dem Fahrzeug 304) des Benutzers betraut ist. Beispielsweise wird die in Schritt 601 erhaltene Zustell- und/oder Abholpositionsinformation (und optional eine in Schritt 601 erhaltene Zustell-und/oder Abholzeitrauminformation) der Zustellervorrichtung (z.B. der Zustellervorrichtung 301) dieses Zustellers zugeordnet.

In einem optionale Schritt 603 wird eine Zugangsberechtigungsinformation zumindest teilweise in Abhängigkeit der in Schritt 601 erhaltenen Zustell- und/oder Abholpositionsinformation und/oder einer in Schritt 601 erhaltenen Zustell-und/oder Abholzeitrauminformation ausgewählt und/oder erzeugt.

Wie oben offenbart, enthält die Zugangsberechtigungsinformation zum Beispiel ein oder mehrere Zugangsberechtigungsparameter. Dabei kann es sich beispielsweise um eine (insbesondere eindeutige) Kennung für eine Zugangsberechtigungsprüfvorrichtung (z.B. eine Zugangsberechtigungsprüfvorrichtung eines Fahrzeugs), eine (insbesondere eindeutige) Kennung für die Zugangsberechtigungsinformation selbst, eine zeitliche Gültigkeitsinformationen, eine räumliche Gültigkeitsinformation, eine Obergrenze der erlaubten Nutzungen der Zugangsberechtigungsinformation, um Zugang zu erhalten, und einer Information, in welchem Ausmaß Zugang gewährt werden darf (also beispielsweise ob alle Türen eines Fahrzeugs geöffnet werden dürfen, oder nur eine oder eine bestimmte Gruppe).

Die zeitlichen Gültigkeitsinformationen definieren beispielsweise einen Zustell-und/oder Abholzeitraum, in dem die Zugangsberechtigungsinformation gültig ist und zum Zugang (z.B. in ein Fahrzeug) berechtigt. Die räumlichen Gültigkeitsinformationen definieren beispielsweise eine Zustell- und/oder Abholposition und/oder einen Zustell- und/oder Abholbereich (z.B. einen Radius um eine Zustell- und/oder Abholposition), in dem die Zugangsberechtigungsinformation gültig ist und zum Zugang (z.B. in ein Fahrzeug) berechtigt.

Die Zugangsberechtigungsinformation wird in Schritt 602 beispielsweise derart erzeugt und/oder ausgewählt, dass die Zugangsberechtigungsinformation an der mit der Zustell- und/oder Abholpositionsinformation assoziierten Zustell- und/oder Abholposition und/oder innerhalb des mit der Zustell- und/oder Abholzeitrauminformation assoziierten Zustell- und/oder Abholzeitraums gültig ist. Zum Beispiel kann die Zugangsberechtigungsinformation aus mehreren in der Zustellungsdienstvorrichtung 200 hinterlegten (z.B. in Programmspeicher 202 gespeicherten) Zugangsberechtigungsinformationen ausgewählt werden. Alternativ oder zusätzlich kann die Zugangsberechtigungsinformation beispielsweise durch eine Berechnung gemäß einer in der Zustellungsdienstvorrichtung 200 hinterlegten (z.B. in Programmspeicher 202 gespeicherten) Berechnungsvorschrift erzeugt werden.

Zum Beispiel berechtigt die Zugangsberechtigungsinformation an der mit der Zustell-und/oder Abholpositionsinformation assoziierten Zustell- und/oder Abholposition und innerhalb des mit der Zustell- und/oder Abholzeitrauminformation assoziierten Zustell- und/oder Abholzeitraums zum Zugang für eine Zustellung und/oder Abholung einer Sendung zum Fahrzeug 304. Zum Beispiel kann die Zugangsberechtigungsinformation von Zustellervorrichtung 301 verwendet und beispielsweise über Kommunikationsverbindung 305 an Fahrzeug 304 gesendet werden, um einem Zusteller Zugang zum Fahrzeug 304 zu ermöglichen.

In einem Schritt 604 wird die in Schritt 601 erhaltene Zustell- und/oder Abholpositionsinformation von der Zustellungsdienstvorrichtung (z.B. der Zustellungsdienstvorrichtung 200) an die Zustellervorrichtung (z.B. die Zustellervorrichtung 301), der die Zustell- und/oder Abholpositionsinformation in Schritt 602 zugeordnet wurde, kommuniziert. Optional werden in Schritt 604 auch die optional in Schritt 601 erhaltene Zustell- und/oder Abholzeitrauminformation und/oder die in Schritt 603 erzeugte und/oder ausgewählte Zugangsberechtigungsinformation von der Zustellungsdienstvorrichtung (z.B. der Zustellungsdienstvorrichtung 200) an diese Zustellervorrichtung (z.B. die Zustellervorrichtung 301) kommuniziert.

Die Zustell- und/oder Abholpositionsinformation (und optional die Zustell- und/oder Abholzeitrauminformation und/oder die Zugangsberechtigungsinformation) wird in Schritt 604 beispielsweise über die Kommunikationsverbindung 303 von der Zustellungsdienstvorrichtung 200 an die Zustellervorrichtung 301 kommuniziert, zum Beispiel durch die Kommunikationsschnittstelle 204 gesendet.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, umfassend
- Bereitstellen (501), durch eine Benutzervorrichtung (100), einer aktivierbaren Benutzerschnittstelle (401) zum Festlegen einer Zustell- und/oder Abholposition,
- Erfassen (502) einer Position der Benutzervorrichtung (100), wenn die Benutzerschnittstelle (401) aktiviert wird, und
- Kommunizieren (504) einer mit der erfassten Position assoziierten Zustell-und/oder Abholpositionsinformation von der Benutzervorrichtung (100) an eine Zustellungsdienstvorrichtung (200).

2. Verfahren gemäß Anspruch 1, wobei die Zustell- und/oder Abholpositionsinformation eine Zustell- und/oder Abholposition für eine Zustellung einer Sendung in ein Fahrzeug (304) angibt.

3. Verfahren gemäß einem der Ansprüche 1 und 2, wobei die aktivierbare Benutzerschnittstelle (401) ein aktivierbares Element einer Benutzeroberfläche (400) der Benutzervorrichtung (100) ist, und/oder wobei die aktivierbare Benutzerschnittstelle (401) eine Schaltfläche, insbesondere eine Tastenschaltfläche, umfasst, und/oder wobei die aktivierbare Benutzerschnittstelle (401) durch eine Benutzereingabe aktivierbar ist.

4. Verfahren gemäß einem der Ansprüche 1 bis 3, ferner umfassend:
- Bereitstellen, durch die Benutzervorrichtung (100), einer weiteren Benutzerschnittstelle (403) zum Festlegen eines Zustell- und/oder Abholzeitraums,
- Erhalten (503) einer Zustell- und/oder Abholzeitrauminformation durch die weitere Benutzerschnittstelle (403) an der Benutzervorrichtung (100), und
- Kommunizieren der erhaltenen Zustell- und/oder Abholzeitrauminformation von der Benutzervorrichtung (100) an die Zustellungsdienstvorrichtung (200).

5. Verfahren gemäß Anspruch 4, wobei die Zustell- und/oder Abholzeitrauminformation einen Zustell- und/oder Abholzeitraum für eine Zustellung einer Sendung in ein Fahrzeug (304) angibt, und/oder wobei die weitere Benutzerschnittstelle ein Element einer Benutzeroberfläche der Benutzervorrichtung ist.

6. Benutzervorrichtung (100), umfassend:
- Mittel (101-107) eingerichtet zur Ausführung des Verfahrens nach einem der Ansprüche 1 bis 5 oder umfassend jeweilige Mittel zur Ausführung der Schritte des Verfahrens nach einem der Ansprüche 1 bis 5.

7. Computerprogramm umfassend Programmanweisungen, die einen Prozessor (101) zur Ausführung und/oder Steuerung des Verfahrens gemäß einem der Ansprüche 1 bis 5 veranlassen, wenn das Computerprogramm auf dem Prozessor (101) läuft.

8. Verfahren, umfassend:
- Erhalten (601) einer Zustell- und/oder Abholpositionsinformation von einer Benutzervorrichtung (100) an einer Zustellungsdienstvorrichtung (200),
- Zuordnen (602), durch die Zustellungsdienstvorrichtung (200), der erhaltenen Zustell- und/oder Abholpositionsinformation zu einer Zustellervorrichtung (301),
- Kommunizieren (604) der erhaltenen Zustell- und/oder Abholpositionsinformation von der Zustellungsdienstvorrichtung (200) an die Zustellervorrichtung (301).

9. Verfahren gemäß Anspruch 8, ferner umfassend:
- Erhalten einer Zustell- und/oder Abholzeitrauminformation von der Benutzervorrichtung (100) an der Zustellungsdienstvorrichtung (200), und
- Kommunizieren der Zustell- und/oder Abholzeitrauminformation an die Zustellervorrichtung (301).

10. Verfahren gemäß einem der Ansprüche 8 und 9, ferner umfassend:
- Erzeugen und/oder Auswählen (603) einer Zugangsberechtigungsinformation zumindest teilweise in Abhängigkeit der erhaltenen Zustell- und/oder Abholpositionsinformation und/oder der erhaltenen Zustell- und/oder Abholzeitrauminformation,
- Kommunizieren der erzeugten und/oder ausgewählten Zugangsberechtigungsinformation an die Zustellervorrichtung (301).

11. Verfahren gemäß Anspruch 10, wobei die Zugangsberechtigungsinformation zum Zugang für die Zustellung in ein Fahrzeug (304) berechtigt, und/oder wobei die Zugangsberechtigungsinformation eine beschränkte zeitliche und/oder räumliche Gültigkeit aufweist und/oder für eine beschränkte Anzahl von Zugängen gültig ist.

12. Verfahren gemäß einem der Ansprüche 8 bis 11, ferner umfassend:
- Bereitstellen eines Computerprogramms gemäß Anspruch 7 zum Erhalten an der Benutzervorrichtung (100).

13. Zustellungsdienstvorrichtung (200), umfassend:
- Mittel (201-204) eingerichtet zur Ausführung des Verfahrens nach einem der Ansprüche 8 bis 12 oder umfassend jeweilige Mittel zur Ausführung der Schritte des Verfahrens nach einem der Ansprüche 8 bis 12.

14. Computerprogramm umfassend Programmanweisungen, die einen Prozessor zur Ausführung und/oder Steuerung des Verfahrens gemäß einem der Ansprüche 8 bis 12 veranlassen, wenn das Computerprogramm auf dem Prozessor läuft.

15. System (300), umfassend:
- eine oder mehrere Benutzervorrichtungen (100) gemäß Anspruch 6, und
- eine oder mehrere Zustellungsdienstvorrichtungen (200) gemäß Anspruch 13.
